# FASCICULE DE BREVET EUROPEEN

(11) **EP 3 593 011 B1**
(45) Date de publication et mention de la délivrance du brevet: **26.05.2021**
(21) Numéro de dépôt: 18707698.9
(22) Date de dépôt: 23.02.2018
(51) Int. Cl.: F16H 25/24, F02K 1/76

(54) **VERIN A VERROUILLAGE INTEGRE**
ZYLINDER MIT INTEGRIERTER VERRIEGELUNG
CYLINDER WITH INTEGRATED LOCKING

(30) Priorité: 06.03.2017 FR 1751772
(43) Date de publication de la demande: 15.01.2020
(73) Titulaire: Safran Electronics & Defense, 75015 Paris (FR)
(72) Inventeur: WERQUIN, Mickael, 75015 PARIS (FR); HAUTECOEUR, Julien, 7501 PARIS (FR); BASTIDE,Christophe, 75015 PARIS (FR); OMNES, Pascal, 75015 PARIS (FR)
(74) Mandataire: Prouvez, Julien
(86) Numéro de dépôt international: PCT/EP2018/054574
(87) Numéro de publication internationale: WO 2018/162259

(56) Documents cités:
- WO-A1-2014/147247
- FR-A1- 2 989 740
- US-A1- 2003 066 284

## Description

### DOMAINE DE L'INVENTION

La présente invention concerne le domaine des actionneurs aéronautiques, et plus particulièrement les actionneurs verrouillables d'inverseur de poussée des réacteurs et, plus particulièrement, des turboréacteurs.

### ARRIERE PLAN DE L'INVENTION

Dans un système classique d'inversion de poussée d'un turboréacteur, la nacelle du turboréacteur est pourvue de surfaces mobiles qui peuvent être déployées de façon à renvoyer vers l'avant une partie du flux de gaz produit par le turboréacteur. Le déploiement des surfaces mobiles permet notamment de réduire les distances d'atterrissage. Chaque surface mobile est déployée à l'aide d'un actionneur et comprend un dispositif principal de verrouillage comportant des verrous en redondance pour relier la surface mobile à la nacelle afin de prévenir tout déploiement accidentel de la surface mobile.

Traditionnellement, les surfaces mobiles sont déplacées au moyen de vérins hydrauliques qui ont l'avantage de rester en position dès lors que la pression dans les chambres du vérin reste la même.

Il a été envisagé d'équiper les inverseurs de poussée d'actionneurs électriques remplaçant les vérins hydrauliques. Un tel actionneur électrique comprend un bâti, une motorisation électrique pour entraîner en rotation une vis à billes. La vis à billes comprend une vis montée sur le bâti pour pivoter et un écrou engagé sur la vis. L'écrou est pourvu de moyens de liaison à la surface mobile et peut se déplacer depuis une première position de rétraction dans laquelle la surface mobile est refermée vers une deuxième position de déploiement dans laquelle la surface mobile dévie au moins une partie du flux du réacteur.

Généralement, les actionneurs de surface mobile peuvent également adopter une troisième position dite de sur-rétraction, atteinte après avoir parcouru une surcourse de rétraction. Un tel actionneur est décrit dans FR 2 989 740 A1 qui concerne un dispositif d'actionnement pour déplacer un capot mobile d'un inverseur de poussée. Lorsque l'écrou est dans sa troisième position de sur-rétraction, il maintient la surface mobile au-delà de sa position de rétraction, la surface mobile comprime alors légèrement les joints de la nacelle coopérant avec la surface mobile, ce qui permet de désengager les verrous du dispositif principal de verrouillage (Primary Lock System - PLS) pour autoriser le déploiement ultérieur de la surface mobile.

Cependant, lorsque la motorisation de l'actionneur n'est plus alimentée en énergie, un effort qui serait appliqué directement sur la surface mobile pourrait la déplacer (choc, vibration pression de l'air sous l'effet du vent apparent ou du flux du réacteur).

Les conséquences d'un déploiement non souhaité d'une surface mobile d'un inverseur de poussée étant classées catastrophiques, il est imposé de rajouter un dispositif de verrouillage supplémentaire. Il a été envisagé d'ajouter un verrou supplémentaire sur la surface mobile ainsi qu'un actionneur de verrouillage/déverrouillage dédié. La nacelle comprenant un nombre important de mécanismes, l'intégration d'un ensemble verrou + actionneur supplémentaire est délicate et est source de poids supplémentaire. Ces éléments doivent en plus être protégés thermiquement, être dimensionnés de manière à ne pas engendrer de vibrations et disposer d'un système de commande dédié. Toutes ces sujétions augmentent le poids et l'encombrement de l'équipement, ce qui est un frein à l'utilisation d'actionneurs électrique pour l'inversion de poussée.

### OBJET DE L'INVENTION

Un but de l'invention est de réduire le poids et l'encombrement d'un dispositif de verrouillage d'un élément déplacé par un actionneur électromécanique.

### RESUME DE L'INVENTION

A cet effet, on prévoit un actionneur verrouillable comprenant un bâti, une vis montée sur le bâti pour pivoter relativement au bâti autour d'un axe longitudinal et un écrou pourvu de moyens de liaison à un élément à déplacer et engagé sur la vis pour se déplacer sur la vis entre une première position de sur-rétraction et une deuxième position de déploiement de part et d'autre d'une troisième position de rétraction. L'actionneur comprend également un manchon solidaire en rotation de la vis et monté à coulissement sur celle-ci pour être déplacé par l'écrou. L'actionneur comprend également un obstacle solidaire du manchon et un cliquet qui est monté mobile sur le bâti et qui est lié à un actionneur de débrayage pour commander le cliquet entre un état actif et un état inactif, le cliquet ayant une portion de blocage destinée à coopérer avec l'obstacle pour bloquer la rotation de la vis selon un premier sens de rotation lorsque le cliquet est dans son état actif. Selon l'invention, le cliquet et l'obstacle sont agencés de manière à ce que le cliquet dans son état actif ne puisse coopérer avec l'obstacle qu'après que l'écrou se soit déplacé d'une distance prédéterminée depuis sa troisième position vers sa deuxième position.

On limite alors les sollicitations sur le cliquet de verrouillage et son actionneur de débrayage à un unique échappement par cycle d'ouverture fermeture de la surface mobile. Ceci permet d'assurer une bonne robustesse du dispositif sans avoir à surdimensionner le cliquet et/ou son actionneur.

La sécurité passive de l'actionneur est améliorée lorsque l'actionneur de débrayage comprend des moyens de retour à sa position active en cas d'absence d'alimentation de l'actionneur de débrayage.

Avantageusement, l'actionneur de débrayage comprend un électro-aimant.

Avantageusement encore, la vis comprend une butée limitant la translation du manchon.

La fabrication de l'actionneur est simplifiée lorsque le manchon comprend des cannelures destinées à coopérer avec des rainures de la vis.

Avantageusement, l'actionneur comprend des moyens de rappel en position du manchon. Très avantageusement, ces moyens de rappel comprennent un ressort hélicoïdal.

Avantageusement encore, le manchon, le cliquet et l'actionneur de débrayage sont agencés pour permettre un libre déplacement de l'écrou depuis une position comprise entre la deuxième position de déploiement et la troisième position de rétraction vers la troisième position de rétraction, et pour que le cliquet soit automatiquement dans son état actif lors du passage de l'écrou à sa troisième position de rétraction sans besoin d'alimenter l'actionneur de débrayage.

L'invention concerne également une nacelle de réacteur comprenant au moins un actionneur d'un des types ci-dessus.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux figures annexées parmi lesquelles :
- la figure 1 est une vue schématique en perspective d'une nacelle pourvue d'un actionneur selon l'invention ;
- la figure 2 est une vue schématique en perspective d'un actionneur selon l'invention ;
- la figures 3 est une vue schématique en coupe de l'actionneur selon l'invention en position de sur-rétraction ;
- la figures 4 est une vue schématique en coupe de l'actionneur selon l'invention en position de rétraction ;
- la figures 5 est une vue schématique en coupe de l'actionneur selon l'invention en position de déploiement ;
- la figure 6 est une vue partielle de détail en perspective de l'actionneur selon l'invention dans une configuration de blocage;
- les figures 7a, 7b et 7c sont des vues schématiques partielles en coupe de l'actionneur selon l'invention dans des configurations remarquables;
- la figure 8 une vue partielle de détail en perspective de l'actionneur selon l'invention dans une première configuration particulière ;

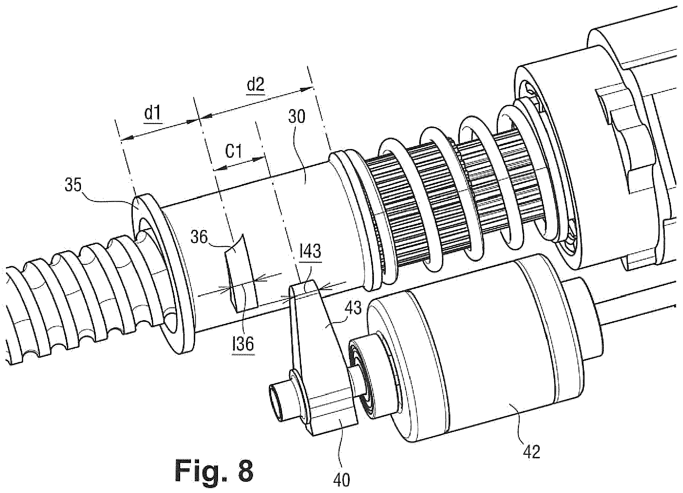

- les figures 8 à 12 sont des vues schématiques vue partielle de détail en perspective de l'actionneur selon l'invention dans des configurations particulières ;

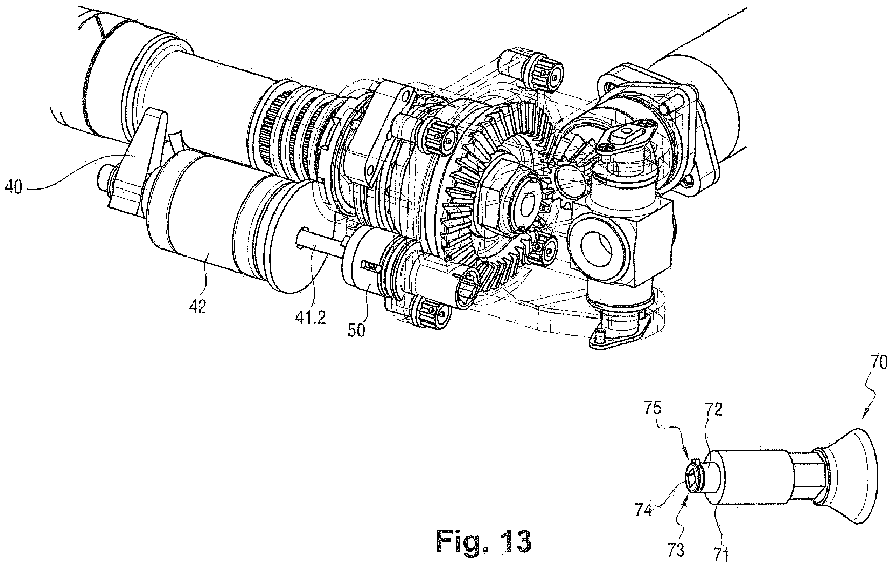

- la figure 13 est une vue de détail en perspective de l'actionneur selon l'invention ;

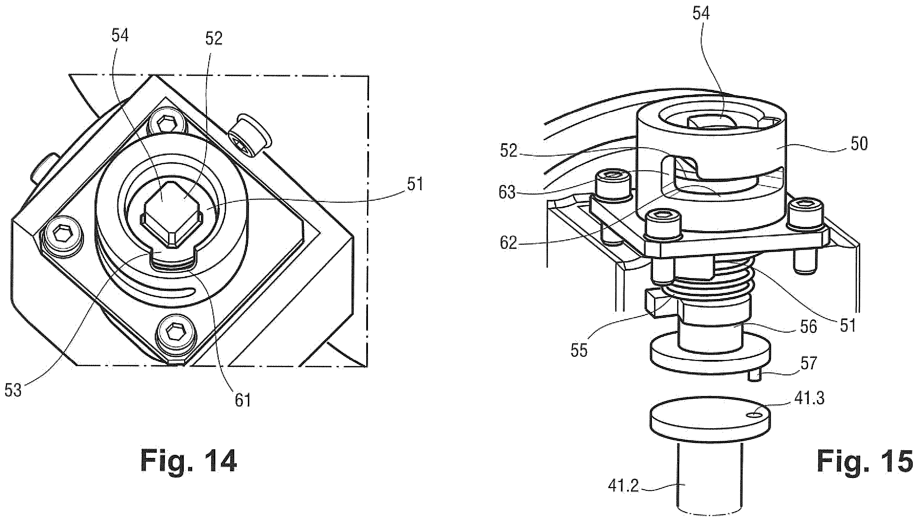

- les figures 14 et 15 sont des vues de détail en perspective d'un dispositif de débrayage de l'actionneur selon l'invention ;

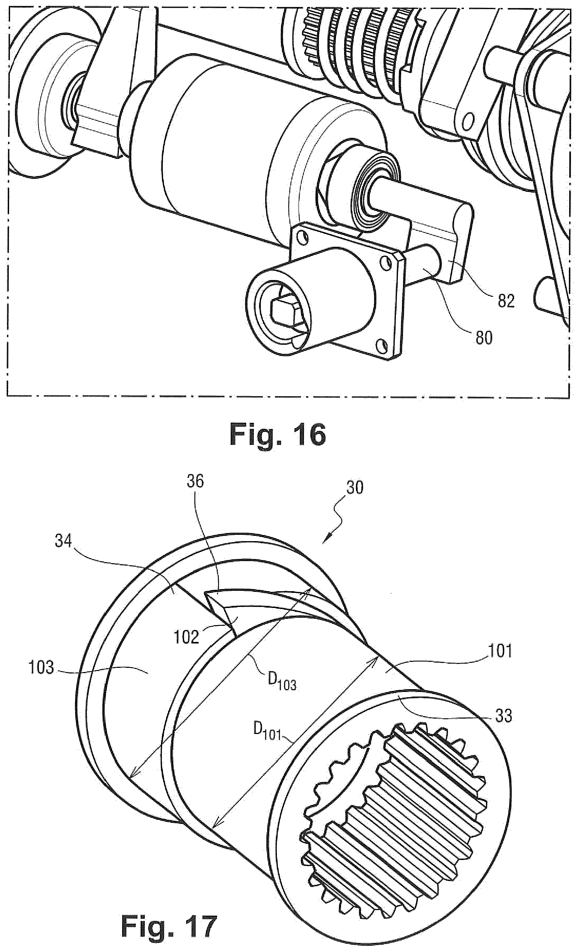

- la figure 16 est une vue de détail en perspective d'un deuxième mode de réalisation du dispositif de débrayage de l'actionneur selon l'invention ;
- la figure 17 est une vue schématique en perspective d'un mode de réalisation d'un manchon d'un troisième mode de réalisation d'un actionneur selon l'invention ;

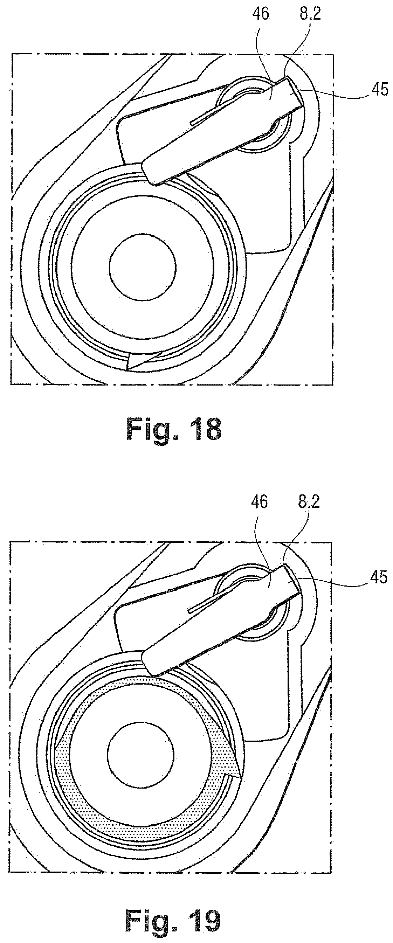

- la figure 18 est une vue schématique partielle en coupe transversale du troisième mode de réalisation de l'invention dans une première configuration;
- la figure 19 est une vue identique à celle de la figure 18 dans une deuxième configuration.

### DESCRIPTION DETAILLEE DE L'INVENTION

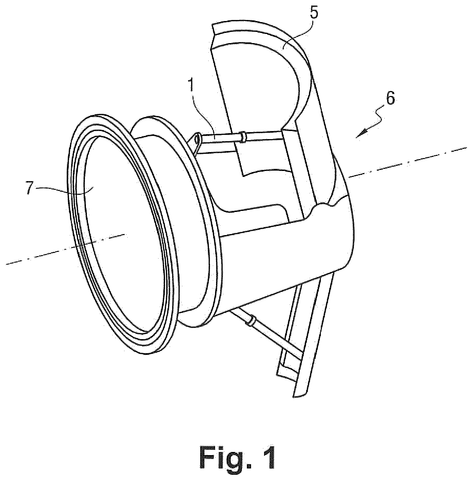

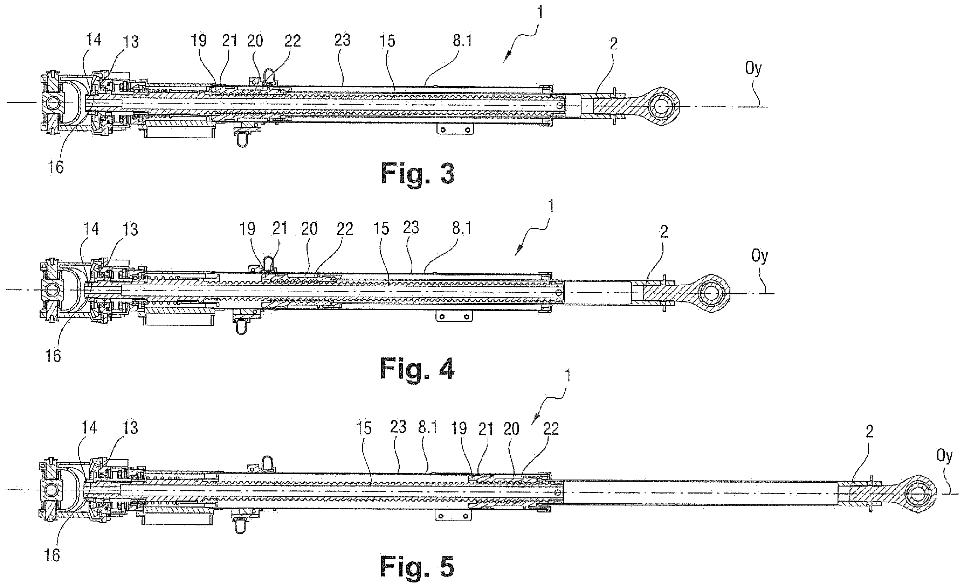

En référence aux figures 1 à 12, l'actionneur verrouillable de l'invention, généralement désigné 1, comprend un tube d'extension 2 dont une première extrémité 3 comporte une chape 4 rotulée reliée à une surface mobile 5 d'un inverseur de poussée 6 d'une nacelle 7 de turboréacteur. Le bâti 8 de l'actionneur 1 comprend un cardan 9 d'articulation de l'actionneur 1 à la nacelle 7 de turboréacteur et un fourreau 8.1 dans lequel le tube d'extension 2 coulisse entre une première position de sur-rétraction (représentée en figure 3) et une deuxième position de déploiement (représentée en figure 5). La figure 4 représente une troisième position de rétraction située entre la première position de sur-rétraction de la figure 3 et la deuxième position de déploiement de la figure 5.

L'actionneur 1 est relié à un moteur 10 par une bride 11 d'accouplement solidaire d'un pignon conique 12 engrenant avec une roue dentée 13 conique. Une première extrémité 14 cannelée d'une vis 15 tubulaire à billes de pas p est montée dans un alésage 16 central rainuré de la roue dentée 13. La vis 15 s'étend selon un axe longitudinal Oy et possède une deuxième extrémité 17 pourvue d'une bague 18 coopérant avec l'intérieur du tube d'extension 2 pour en guider le coulissement selon l'axe longitudinal Oy. Un écrou 19 à billes est engagé sur la vis 15. Une première rainure 20 réalisée dans la face extérieure 21 de l'écrou 19 reçoit une clavette 22 qui coopère avec une deuxième rainure 23 du fourreau 8.1 bloquant ainsi la rotation de l'écrou 19 relativement à la vis 15. L'écrou 19 est également relié par une griffe 24 de liaison à une deuxième extrémité 25 du tube d'extension 2.

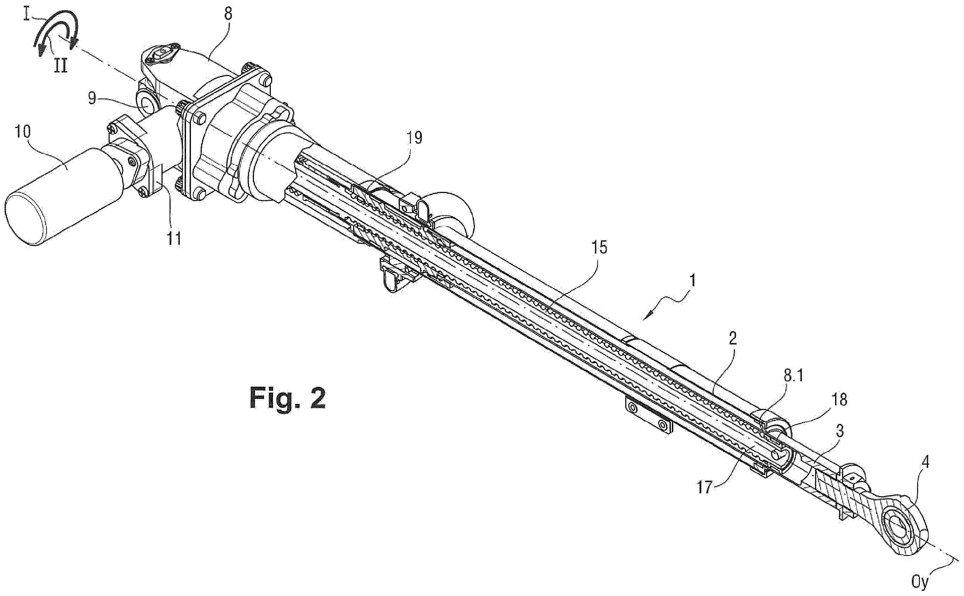

La vis 15 est montée à rotation sur le bâti 8 à l'aide d'un palier 26. Ainsi la rotation de la vis 15 dans un premier sens (représenté par la flèche I sur la figure 2) permet de déplacer l'écrou 19 sur la vis 15 entre une première position de sur-rétraction de l'écrou 19 et une deuxième position de déploiement de l'écrou 19 de part et d'autre d'une troisième position de rétraction de l'écrou 19. Les première, deuxième et troisième positions de l'écrou correspondent respectivement à la première position de sur-rétraction du tube d'extension 2 (représentée en figure 3), la deuxième position de déploiement du tube d'extension 2 (représentée en figure 5) et la troisième position de rétraction du tube d'extension 2 (représentée en figure 4).

La distance séparant la première position de sur-rétraction de l'écrou 19 et la troisième position de rétraction de l'écrou 19 est appelée surcourse de rétraction et désignée Cₛᵤᵣ.

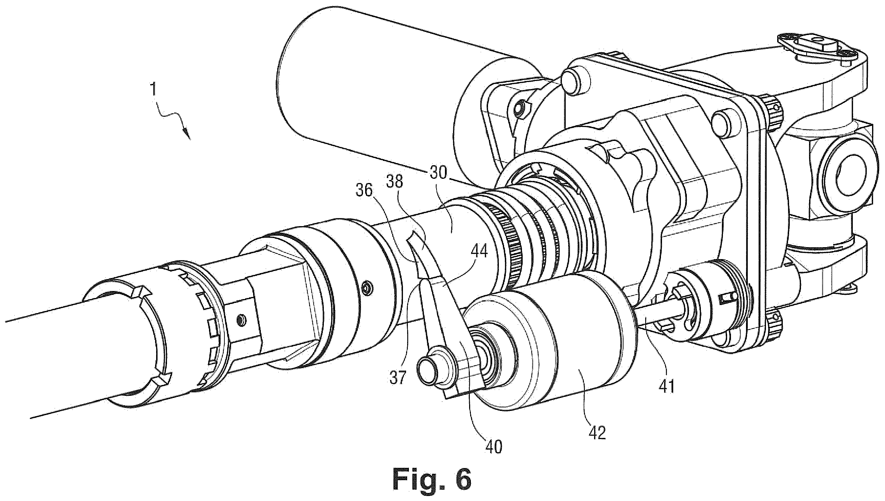

Comme visible en figures 6, l'actionneur 1 comprend un manchon 30 cylindrique dont l'alésage intérieur 31 comprend une portion lisse 31.1 et une portion rainurée 31.2 pour coopérer avec des cannelures 27 d'une portion 28 de la première extrémité 14 de la vis 15. La portion lisse 31.1 et la portion rainurée 31.2 du manchon sont séparées l'une de l'autre par un épaulement intérieur 31.3. Le manchon 30 est donc solidaire en rotation de la vis 15 et peut coulisser sur celle-ci sur une course totale L délimitée par, d'une part, le bâti 8 de l'actionneur 1 et, d'autre part, une butée 29 annulaire de la vis 15. Un ressort 32 hélicoïdal de compression s'étend entre le bâti 8 et une première extrémité 33 du manchon 30 et repousse le manchon 30 en direction de la deuxième extrémité 17 de la vis 15 jusqu'à ce que l'épaulement 31.3 vienne au contact de la butée 29. Cette position est représentée en figure 8 et est adoptée par le manchon 30 lorsque l'écrou 19 est entre sa troisième position de rétraction et sa deuxième position de déploiement. La deuxième extrémité 34 du manchon 30 comprend un épaulement annulaire 35 contre lequel peut venir en appui une extrémité 19.1 de l'écrou 19.

Un obstacle, ici sous la forme d'une dent 36, est solidaire du manchon 30 et vient en saillie radiale de celui-ci. La dent 36 comprend une première face 37 de blocage qui a une largeur l₃₇ et qui s'étend dans un plan comprenant l'axe longitudinal Oy, et une deuxième face d'échappement 38 courbe. L'axe de la dent 36 se situe à une distance d₁ de l'épaulement 35 et à une distance d₂ de la première extrémité 33 du manchon 30.

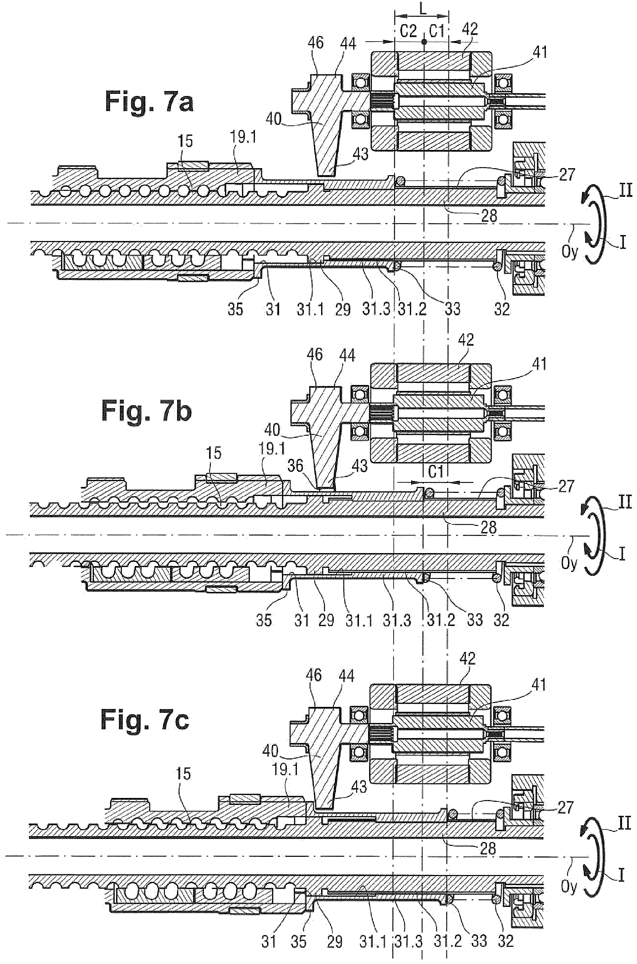

L'actionneur 1 comprend un cliquet 40 solidaire en rotation de la première extrémité 41.1 d'un arbre 41 s'étendant parallèlement à l'axe longitudinal Oy et traversant un électro-aimant 42. La deuxième extrémité 41.2 de l'arbre 41 comporte une douille rainurée 50 dont la structure sera décrite plus loin. Un dispositif de rappel en position, ici un ressort à lame non représenté, amène le cliquet 40 dans une position active dans laquelle une portion de blocage 43 (ici de largeur l₄₃ sensiblement égale à la largeur l₃₇ de la première face de blocage 37), située à la première extrémité 44 du cliquet 40, vient en contact avec le manchon 30 (figures 6 à 8). Lorsque le cliquet est dans cette position active, la portion de blocage 43 peut coopérer avec la première face 37 de blocage de la dent 36 et bloquer une rotation du manchon 30 (et donc de la vis 15) selon le premier sens de rotation I (figure 7b). Dans cette position, les plans médians respectifs de la portion de blocage 43 du cliquet et de la première face 37 de blocage de la dent 36 sont alignés. Cette position de blocage du manchon 30 (qui correspond à une quatrième position de blocage de l'écrou 19) est atteinte (figure 7b) après que le manchon 30 a parcouru une première portion de course C₁ depuis la position qu'il occupe lorsque l'écrou 19 est dans sa deuxième position de sur-rétraction (figure 3 et figure 7c). Le manchon 30 parcourt ensuite une deuxième portion de course C₂ avant de venir contre la butée annulaire 29 de la vis 15 (figure 7a). La course totale L du manchon 30 est donc égale à la somme de la première portion de course C₁ et de la deuxième portion de course C₂. Dans le cas d'une rotation de la vis 15 selon un deuxième sens de rotation II opposé au premier sens I, la face d'échappement 38 de la dent 36 qui ferait face à la portion de blocage 43 soulèverait celle-ci et la rotation selon le sens II ne serait pas bloquée.

La mise sous tension de l' électro-aimant 42 amène le cliquet 40 dans une position inactive dans laquelle il est éloigné du manchon 30 et ne peut plus collaborer avec la dent 36.

Les distances d₁ et d₂, les première et deuxième portions de course C₁ et C₂ du manchon 30 sur la vis 15 ainsi que les largeurs l₃₇ et l₄₃ respectives de la face de blocage 37 et de la portion de blocage 43 du cliquet 40 sont choisies en fonction du pas p de la vis 15, de la surcourse de rétraction Cₛᵤᵣ de l'écrou 19 et d'une distance prédéterminée jᵥₑᵣ de manière à ce que le cliquet 40 dans son état actif ne puisse coopérer avec la dent 36 qu'après que l'écrou 19 se soit déplacé de la distance prédéterminée jᵥₑᵣ depuis sa troisième position vers sa deuxième position.

La distance prédéterminée jᵥₑᵣ correspond à un jeu de verrouillage fonctionnel nécessaire pour établir un deuxième verrouillage lorsque le dispositif principal de verrouillage de la surface mobile 5 est verrouillé.

Dans ce mode de réalisation, on respectera les conditions suivantes :
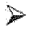 (l₃₇/2) + (l₄₃/2) <p ;
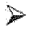 C₁ > Cₛᵤᵣ + jᵥₑᵣ ;
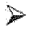 C₂ > (l₃₇/2) + (l₄₃/2).

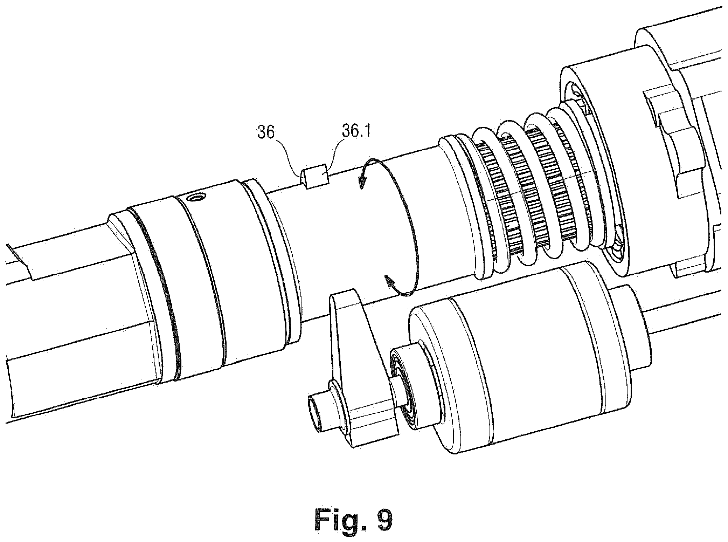

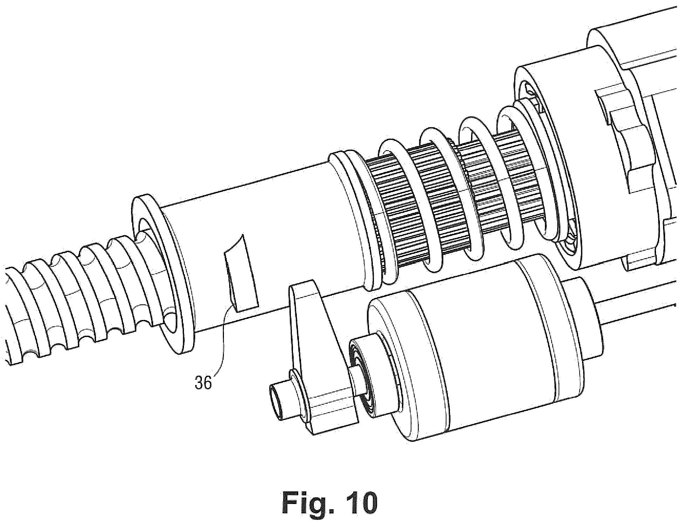

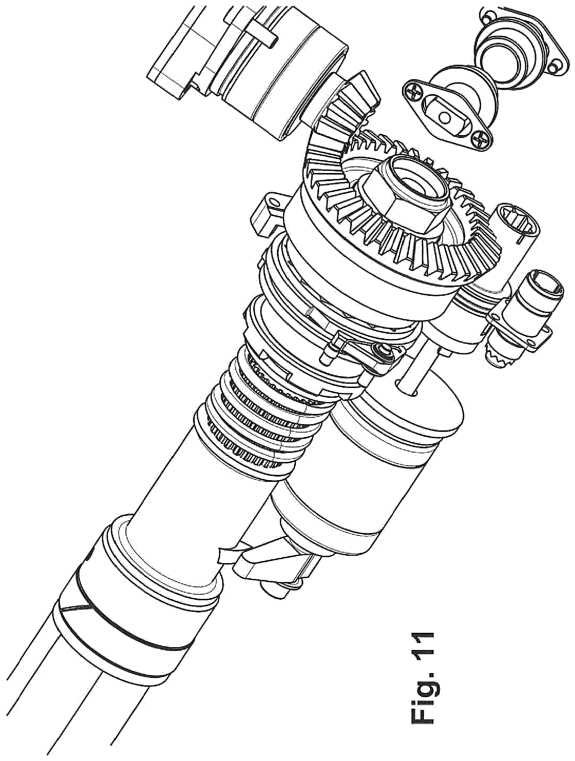

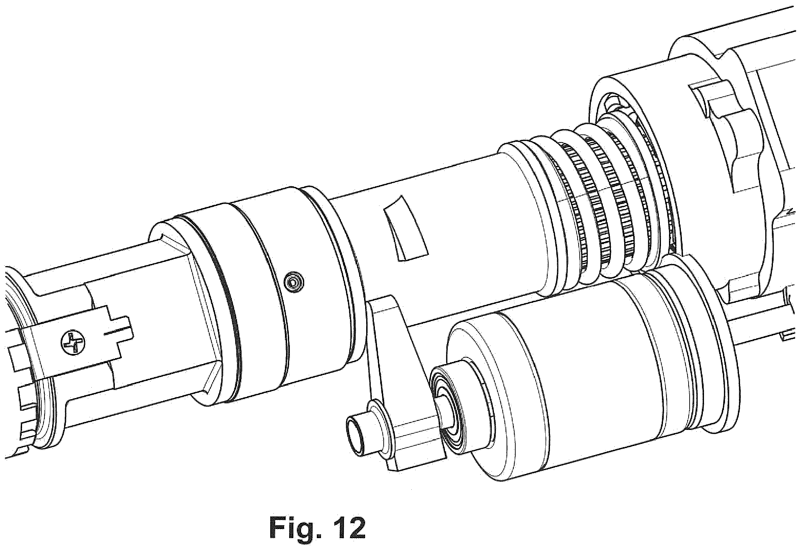

En fonctionnement, l'écrou 19 (et donc la surface mobile 5) est initialement dans sa troisième position de rétraction représentée en figure 4 et le cliquet 40 est dans un état actif. La surface de blocage 37 de la dent 36 est éloignée de la portion de blocage 43 du cliquet 40 d'un secteur angulaire Aᵥₑᵣ égal (jᵥₑᵣ / p). Pour déployer la surface mobile 5, on met sous tension l'électro-aimant 42 et le cliquet 40 passe dans son état inactif. On commande ensuite le moteur 10 pour qu'il imprime à la vis 15 une rotation selon le deuxième sens de rotation II pour amener l'écrou 19 vers sa première position de sur-rétraction. Le cliquet 40 est inactif et laisse libre la rotation du manchon 30 et donc de la vis 15. L'écrou 19 est amené depuis sa troisième position de rétraction vers sa première position de sur-rétraction. Au cours de ce déplacement, l'extrémité 19.1 de l'écrou 19 vient en appui sur l'épaulement 35 et déplace le manchon 30 à l'encontre de l'effort du ressort 32. On commande alors le désengagement des verrous du dispositif principal de verrouillage de la surface mobile 5. Une fois ces verrous désengagés, on commande le moteur 10 pour qu'il imprime à la vis 15 une rotation, selon le premier sens de rotation I, jusqu'à ce que l'écrou 19 atteigne sa deuxième position de déploiement correspondant à une ouverture complète de la surface mobile 5. Au cours de ce déplacement, l'épaulement 31.3 du manchon 30 vient contre la butée 29 de la vis 15 et l'extrémité 19.1 de l'écrou 19 n'est plus en contact avec l'épaulement 35 du manchon 30. Une fois l'écrou 19 arrivé en sa position de déploiement, on coupe la tension appliquée aux bornes de l'électroaimant 42 et le cliquet 40 retourne dans son état actif. La portion de blocage 43 prend alors appui sur le manchon 30 à une position voisine de la dent 36 (figure 10). On commande alors une rotation du moteur 10 pour qu'il imprime à la vis 15 une rotation selon le deuxième sens de rotation II pour faire passer l'écrou 19 depuis sa deuxième position de déploiement à sa troisième position de rétraction. La portion de blocage 43 laisse libre la rotation du manchon 30 (et donc de la vis 15) et demeure au contact du manchon 30 sans être soulevé par la face d'échappement 38 de la dent 36, limitant l'usure de pièces liées au cliquet 40. Lorsque l'écrou 19 se dirige vers sa troisième position de rétraction (figure 7), l'extrémité 19.1 de l'écrou 19 vient au contact de l'épaulement 35 du manchon 30. Au cours de ce déplacement, l'écrou 19 déplace le manchon 30 à l'encontre de l'effort du ressort 32 et la surface d'échappement 37 de la dent 36 vient soulever la portion de blocage 43 du cliquet 40 (figure 11) qui laisse donc libre la rotation de la vis 15 dans le sens II. Une fois que l'écrou 19 a atteint sa première position de sur-rétraction (figure 12), on commande l'engagement des verrous du dispositif principal de verrouillage de la surface mobile 5. On commande alors le moteur 10 pour qu'il imprime à la vis 15 une rotation selon le premier sens de rotation I pour que l'écrou 19 passe depuis sa première position de sur-rétraction à sa troisième position de rétraction représentée en figure 9. Dans cette position, la portion de blocage 43 du cliquet 40 est éloignée de la face de blocage 37 de la dent 36 d'un secteur angulaire Aᵥₑᵣ et d'une distance longitudinale jᵥₑᵣ. Dans cette configuration, en cas de défaillance du dispositif principal de verrouillage de la surface mobile 5, l'effort exercé sur la surface mobile 5 et qui tend à déplacer l'écrou 19 depuis sa troisième position de rétraction vers sa deuxième position de déploiement entraîne une rotation de la vis 15 et du manchon 30 dans le sens I. A l'issue d'une rotation d'amplitude Aᵥₑᵣ dans le premier sens de rotation I et qui correspond à un déplacement de l'écrou 19 pouvant être inférieur au millimètre, la face de blocage 37 de la dent 36 vient en appui sur la portion de blocage 43 du cliquet 40, ce qui bloque la rotation de la vis 15 et empêche le déploiement de la surface mobile 5.

En référence aux figures 13 à 15, la douille rainurée 50 est de forme cylindrique et comprend en son centre un arbre 51 dont une première extrémité 52 comprend un épaulement 53 annulaire en saillie duquel vient un carré 54. Un ressort hélicoïdal 55 de compression s'étend entre le bâti 8 et l'épaulement 53. La deuxième extrémité 56 de l'arbre 51 comprend un crabot 57 faisant face à une lumière homologue 41.3 portée par la deuxième extrémité 41.2 de l'arbre 41. Comme visible sur les figures 14 et 15 la douille 50 comprend une rainure 60 en baïonnette qui comprend un premier tronçon 61 s'étendant parallèlement à l'axe longitudinal Oy et qui débouche sur une surface supérieure 58 de la douille 50. Ce premier tronçon 61 débouche dans un deuxième tronçon radial 62 dont l'extrémité débouche dans un troisième tronçon 63 borgne parallèle au premier tronçon 61. La douille 50 est destinée à coopérer avec une clef 70 dont l'extrémité 71 comprend une portion de cylindre 72 dont le diamètre extérieur 73 est sensiblement inférieur au diamètre intérieur de la douille 50. L'extrémité 71 de la clef 70 comprend une empreinte carrée 74 destinée à coopérer avec le carré 54. Enfin, un téton 75 vient en saillie radiale de la portion de cylindre 72.

Lors des opérations de maintenance sur l'actionneur 1, on introduit l'extrémité 71 de la clef 70 dans la douille 50 de manière à ce que le téton 75 soit engagé dans le premier tronçon 61 de la rainure 60. On enfonce alors la clef 70 de manière à ce que le téton 75 vienne dans le deuxième tronçon 62 radial de la rainure 60. Ce faisant le crabot 57 vient s'engager dans la lumière 41.3 en même temps que le carré 54 vient s'engager dans l'empreinte carré 74. La clef 70 est alors liée en rotation via l'arbre 51 à l'arbre 41. On tourne alors la clef 70 jusqu'à ce que le téton 75 vienne face au troisième tronçon borgne 63. Ce mouvement de la clef 70 provoque une rotation de l'arbre 41 qui amène le cliquet 40 dans sa position inactive. On relâche alors la clef 70 et le téton 75 vient en butée sur le fond du troisième tronçon borgne 63, bloquant ainsi la clef 70 et empêchant son retrait.

Ainsi, il est impossible de retirer la clef 70 de la douille 50 sans avoir imprimé à celle-ci (et donc à l'arbre 41.2) un mouvement inverse de celui décrit ci-dessus et qui ramène le cliquet 40 dans sa position active. L'utilisation d'une telle clef 70 permet de garantir que le verrouillage de l'actionneur 1 est bien effectif à l'issue des opérations de maintenance, la clef 70 peut également être agencée de telle manière que la fermeture du capot de nacelle soit impossible lorsqu'elle est engagée dans la douille 50 améliorant encore la fiabilité du dispositif de verrouillage de l'actionneur.

Selon un deuxième mode de réalisation représenté en figure 16, la deuxième extrémité 56 de l'arbre 51 comprend un doigt 80 faisant face à une palette 82 s'étendant radialement de la deuxième extrémité 41.2 de l'arbre 41.

Lors des opérations de maintenance sur l'actionneur 1, on introduit l'extrémité 71 de la clef 70 dans la douille 50 de manière à ce que le téton 75 soit engagé dans le premier tronçon 61 de la rainure 60. On enfonce alors la clef 70 de manière à ce que le téton 75 vienne dans le deuxième tronçon 62 radial de la rainure 60. Ce faisant, le doigt 80 vient déplacer la palette 82 de l'arbre 41, ce qui amène le cliquet 40 dans sa position inactive. On tourne alors la clef 70 jusqu'à ce que le téton 75 vienne face au troisième tronçon borgne 63. On relâche alors la clef 70 et le téton 75 vient en butée sur le fond du troisième tronçon borgne 63, bloquant ainsi la clef 70 et empêchant son retrait. Ainsi, il est impossible de retirer la clef 70 de la douille 50 sans avoir imprimé à celle-ci un mouvement inverse de celui décrit ci-dessus et qui ramène le cliquet 40 dans sa position active. Lors du fonctionnement de l'actionneur, le doigt 80 reste à distance de la palette 82 lors du fonctionnement du cliquet 42, n'engendrant pas de friction ou de contact mécanique, ce qui améliore la robustesse de cette partie de l'actionneur.

Selon un troisième mode de réalisation représenté aux figures 17 à 19, la première portion 101 du manchon 30 située entre la première extrémité 33 du manchon 30 et la face 102 transversale de la dent 36 qui s'étend face à la première extrémité 33 du manchon 30 est d'un diamètre extérieur D₁₀₁ inférieur au diamètre extérieur D₁₀₃ de la deuxième portion 103 du manchon 30 qui s'étend entre la face 102 transversale de la dent 36 et la deuxième extrémité 34 du manchon 30.

Le cliquet 40 comporte une portion de butée 45 située en sa deuxième extrémité 46 opposée à la première extrémité 44 du cliquet 40. Cette portion de butée 45 est agencée pour pouvoir venir au contact d'une butée 8.2 solidaire du bâti 8 lorsque le cliquet 40 est dans sa position active.

La position de la butée 8.2 ainsi que les diamètres D₁₀₁ et D₁₀₃ sont choisi de manière à ce que, le cliquet 40 étant dans sa position active:
- lorsque la portion de blocage 43 du cliquet 40 fait face à la première portion 101 du manchon 30, la portion de butée 45 est en contact avec la butée 8.2 et la portion de blocage 43 est à une certaine distance de la première portion 101 et n'est alors pas en contact avec celle-ci (figure 19);
- lorsque la portion de blocage 43 du cliquet 40 fait face à la deuxième portion 103 du manchon 30, la portion de blocage 43 vient au contact de la deuxième portion 103 et peut collaborer avec la face de blocage 37 ou la face de dégagement 38 de la dent 36 (figure 18).

Ainsi, lors des phases de passage de l'écrou 19 depuis sa troisième position de rétraction -augmentée de la distance prédéterminée jᵥₑᵣ- jusqu'à sa deuxième position de déploiement, la portion de blocage 43 du cliquet 40 n'est pas en contact avec le manchon 30 et aucun de ces deux éléments n'est soumis à une usure par friction, améliorant ainsi la durée de vie de ceux-ci.

Bien entendu l'invention n'est pas limitée aux modes de réalisation décrits mais englobe toute variante entrant dans le champ d'application de l'invention telle que définie par les revendications.

En particulier :
- bien qu'ici, l'actionneur comprenne un ressort hélicoïdal s'étendant entre le bâti et le manchon, l'invention s'applique également à d'autres types de moyens de rappel du manchon en position comme par exemple des rondelles Belleville ou un manchon élastomère ;
- bien qu'ici la largeur de la portion de blocage du cliquet soit sensiblement égale à la largeur de la face de blocage de la dent, l'invention s'applique également à d'autres largeurs de la portion de blocage comme par exemple une largeur de la portion de blocage inférieure ou supérieure à la largeur de la face de blocage ;
- bien qu'ici l'actionneur comprenne un tube d'extension muni d'une chape rotulée, l'invention s'applique également à d'autres moyens de liaison à un élément à déplacer comme par exemple une bielle reliée par un œillet ou un pivot ;
- bien qu'ici le cliquet coopère avec une dent, l'invention s'applique également à d'autres types d'obstacles comme par exemples un encoche réalisée dans le manchon ;
- bien qu'ici l'écrou soit lié à une surface mobile d'un inverseur de poussée, l'invention s'applique également à d'autres types d'éléments à déplacer comme par exemple une gouverne d'avion ;
- bien qu'ici l'actionneur de débrayage comprenne un électro-aimant, l'invention s'applique également à d'autres types d'actionneur de débrayage comme par exemple un moteur électrique ;
- bien qu'ici le fonctionnement du dispositif ait été décrit sous la forme d'étapes successives, l'invention s'applique également à des étapes ayant lieu simultanément ou dans un ordre différent ;
- bien qu'ici le tube d'extension comporte une chape rotulée, l'invention s'applique également à une chape rotulée directement fusionnée au tube d'extension ;
- bien qu'ici le bâti de l'actionneur comprenne un cardan d'articulation de l'actionneur à la nacelle, l'invention s'applique également à un bâti de l'actionneur comprenant une rotule d'articulation de l'actionneur à la nacelle ;
- bien qu'ici l'actionneur comprenne une bague en bronze, l'invention s'applique également à d'autres matériaux de glissement comme du PTFE ;
- bien qu'ici l'écrou comprenne une clavette qui coopère avec le fourreau, l'invention s'applique également à d'autres moyens d'anti-rotation, comme par exemple des douilles à billes ou un blocage en anti-rotation réalisé par la jonction entre le tube d'extension et la nacelle ;
- bien qu'ici le dispositif de rappel en position de l'actionneur comprenne un ressort à lame, l'invention s'applique également à d'autres types de moyens de rappel comme par exemple un ressort de torsion ou un ressort hélicoïdal ;
- bien qu'ici la vis ait un pas à droite, l'invention s'applique également à une vis dont le pas serait inversé, impliquant une inversion des sens de rotation de l'ensemble des autres éléments.

## Revendications

1. Actionneur verrouillable (1) comprenant :
- un bâti (8) ;
- une vis (15) montée sur le bâti (8) pour pivoter relativement au bâti (8) autour d'un axe longitudinal (Oy);
- un écrou (19) pourvu de moyens de liaison (2) à un élément à déplacer (5) et engagé sur la vis pour se déplacer sur la vis (15) entre une première position de sur-rétraction et une deuxième position de déploiement de part et d'autre d'une troisième position de rétraction caractérisé en qu'il comprend
- un manchon (30) solidaire en rotation de la vis (15) et monté à coulissement sur celle-ci pour être déplacé par l'écrou (19);
- un obstacle (36) solidaire du manchon (30) et un cliquet (40) qui est monté mobile sur le bâti (8) et qui est lié à un actionneur de débrayage (42) pour commander le cliquet (40) entre un état actif et un état inactif, le cliquet (40) ayant une portion de blocage (43) destinée à coopérer avec l'obstacle (36) pour bloquer la rotation de la vis (15) selon un premier sens de rotation (I) lorsque le cliquet (40) est dans son état actif,
le cliquet (40) et l'obstacle (36) étant agencés de manière à ce que le cliquet (40) dans son état actif ne puisse coopérer avec l'obstacle (36) qu'après que l'écrou (19) se soit déplacé d'une distance prédéterminée (jᵥₑᵣ) depuis sa troisième position vers sa deuxième position.

2. Actionneur verrouillable (1) selon la revendication 1, dans lequel l'actionneur de débrayage (42) comprend des moyens de retour à son état actif en cas d'absence d'alimentation de l'actionneur de débrayage (42).

3. Actionneur verrouillable (1) selon l'une des revendications précédentes, dans lequel l'actionneur de débrayage (42) comprend un électro-aimant.

4. Actionneur verrouillable (1) selon l'une des revendications précédentes, dans lequel la vis (15) comprend une butée (29) limitant la translation du manchon (30) .

5. Actionneur verrouillable (1) selon l'une des revendications précédentes, dans lequel le manchon (30) comprend une portion rainurée (31.2) destinée à coopérer avec des cannelures (27) de la vis (15).

6. Actionneur verrouillable (1) selon l'une des revendications précédentes, comprenant des moyens de rappel en position (32) du manchon (30).

7. Actionneur verrouillable (1) selon la revendication 6, dans lequel les moyens de rappel comprennent un ressort hélicoïdal (32).

8. Actionneur verrouillable (1) selon la revendication 1, dans lequel le cliquet (40) comprend un dispositif (50) de débrayage manuel.

9. Actionneur verrouillable (1) selon l'une des revendications précédentes, dans lequel le manchon (30) comprend une première portion (101) et une deuxième portion (103), le diamètre extérieur (D₁₀₁) de la première portion (101) est inférieur au diamètre extérieur (D₁₀₃) de la deuxième portion (103).

10. Actionneur verrouillable (1) selon la revendication 9, dans lequel la première portion (101) est située entre une première extrémité (33) du manchon (30) et une face (102) transversale de l'obstacle (36) solidaire du manchon (30) qui s'étend face à une première extrémité (33) du manchon (30).

11. Actionneur verrouillable (1) selon la revendication 1, **caractérisé en ce que** le manchon (30), le cliquet (40) et l'actionneur de débrayage (42) sont agencés pour permettre un libre déplacement de l'écrou (19) depuis une position comprise entre la deuxième position de déploiement et la troisième position de rétraction vers la troisième position de rétraction, et pour que le cliquet (40) soit automatiquement dans son état actif lors du passage de l'écrou à sa troisième position de rétraction sans besoin d'alimenter l'actionneur de débrayage (42).

12. Nacelle (7) de réacteur comprenant au moins un actionneur verrouillable (1) selon l'une des revendications précédentes.

## Patentansprüche

1. Verriegelbarer Aktor (1), umfassend:
- ein Gestell (8);
- eine Schraube (15), die an dem Gestell (8) gelagert ist, um sich relativ zu dem Gestell (8) um eine Längsachse (Oy) zu drehen;
- eine Mutter (19), die mit Verbindungsmitteln (2) zur Verbindung mit einem zu verschiebenden Element (5) versehen ist und mit der Schraube in Eingriff steht, um sich auf der Schraube (15) zwischen einer übereingefahrenen ersten Position und einer ausgefahrenen zweiten Position zu beiden Seiten einer eingefahrenen dritten Position zu bewegen, **dadurch gekennzeichnet, dass** er umfasst
- eine Hülse (30), die drehfest mit der Schraube (15) verbunden und verschiebbar auf derselben gelagert ist, um von der Mutter (19) verschoben zu werden;
- ein Hindernis (36), das fest mit der Hülse (30) verbunden ist, und eine Sperrklinke (40), die beweglich an dem Gestell (8) gelagert und mit einem Ausrückaktor (42) verbunden ist, um die Sperrklinke (40) zwischen einem aktiven Zustand und einem inaktiven Zustand zu steuern, wobei die Sperrklinke (40) einen Blockierabschnitt (43) hat, der dazu bestimmt ist, mit dem Hindernis (36) zusammenzuwirken, um die Drehung der Schraube (15) in einer ersten Drehrichtung (I) zu blockieren, wenn die Sperrklinke (40) in ihrem aktiven Zustand ist,
wobei die Sperrklinke (40) und das Hindernis (36) so ausgebildet sind, dass die Sperrklinke (40) in ihrem aktiven Zustand nur mit dem Hindernis (36) zusammenwirken kann, nachdem die Mutter (19) um einen vorbestimmten Abstand (jᵥₑᵣ) ab ihrer dritten Position in Richtung ihrer zweiten Position bewegt wurde.

2. Verriegelbarer Aktor (1) nach Anspruch 1, bei dem der Ausrückaktor (42) Rückkehrmittel umfasst, um den Ausrückaktor (42) bei fehlender Versorgung desselben in seinen aktiven Zustand zurückzubringen.

3. Verriegelbarer Aktor (1) nach einem der vorhergehenden Ansprüche, bei dem der Ausrückaktor (42) einen Elektromagneten umfasst.

4. Verriegelbarer Aktor (1) nach einem der vorhergehenden Ansprüche, bei dem die Schraube (15) einen Anschlag (29) umfasst, der die Translationsbewegung der Hülse (30) begrenzt.

5. Verriegelbarer Aktor (1) nach einem der vorhergehenden Ansprüche, bei dem die Hülse (30) einen mit Nuten versehenen Abschnitt (31.2) umfasst, der dazu bestimmt ist, mit Rillen (27) der Schraube (15) zusammenzuwirken.

6. Verriegelbarer Aktor (1) nach einem der vorhergehenden Ansprüche, umfassend Rückstellmittel (32) zum Rückstellen der Hülse (30) in ihre Position.

7. Verriegelbarer Aktor (1) nach Anspruch 6, bei dem die Rückstellmittel eine Schraubenfeder (32) umfassen.

8. Verriegelbarer Aktor (1) nach Anspruch 1, bei dem die Sperrklinke (40) eine manuelle Ausrückvorrichtung (50) umfasst.

9. Verriegelbarer Aktor (1) nach einem der vorhergehenden Ansprüche, bei dem die Hülse (30) einen ersten Abschnitt (101) und einen zweiten Abschnitt (103) umfasst, wobei der Außendurchmesser (D₁₀₁) des ersten Abschnitts (101) kleiner als der Außendurchmesser (D₁₀₃) des zweiten Abschnitts (103) ist.

10. Verriegelbarer Aktor (1) nach Anspruch 9, bei dem sich der erste Abschnitt (101) zwischen einem ersten Ende (33) der Hülse (30) und einer Querfläche (102) des Hindernisses (36) befindet, das fest mit der Hülse (30) verbunden ist und einem ersten Ende (33) der Hülse (30) gegenübersteht.

11. Verriegelbarer Aktor (1) nach Anspruch 1, **dadurch gekennzeichnet, dass** die Hülse (30), die Sperrklinke (40) und der Ausrückaktor (42) so ausgebildet sind, dass sie eine freie Bewegung der Mutter (19) von einer Position zwischen der ausgefahrenen zweiten Position und der eingefahrenen dritten Position in Richtung der eingefahrenen dritten Position gestatten, und dass die Sperrklinke (40) automatisch in ihrem aktiven Zustand ist, wenn die Mutter in ihre eingefahrene dritte Position übergeht, ohne dass der Ausrückaktor (42) gespeist werden muss.

12. Triebwerksgondel (7), umfassend mindestens einen verriegelbaren Aktor (1) nach einem der vorhergehenden Ansprüche.

## Claims

1. A lockable actuator (1) comprising:
- a body (8);
- a screw (15) mounted on the body (8) to pivot relative to the body (8) about a longitudinal axis (Oy);
- a nut (19) provided with connection means (2) for connection to an element (5) to be moved and engaged on the screw so as to move along the screw (15) between an over-retracted first position and a deployed second position on opposite sides of a retracted third position; **characterized in that** it comprises:
- a sleeve (30) constrained to rotate with the screw (15) and slidably mounted thereon in order to be moved by the nut (19); and
- an obstacle (36) secured to the sleeve (30) and a pawl (40) that is mounted to move on the body (8) and that is connected to a declutching actuator (42) in order to control the pawl (40) to take up an active state and an inactive state, the pawl (40) having a blocking portion (43) for co-operating with the obstacle (36) in order to block turning of the screw (15) in a first direction of rotation (I) when the pawl (40) is in its active state;
the pawl (40) and the obstacle (36) being arranged in such a manner that the pawl (40) in its active state can co-operate with the obstacle (36) only after the nut (19) has been moved through a predetermined distance (j_{lock}) from its third position towards its second position.

2. A lockable actuator (1) according to claim 1, wherein the declutching actuator (42) has return means for returning it to its active state in the event of the declutching actuator (42) not being powered.

3. A lockable actuator (1) according to either preceding claim, wherein the declutching actuator (42) comprises an electromagnet.

4. A lockable actuator (1) according to any preceding claim, wherein the screw (15) includes an abutment (29) limiting movement in translation of the sleeve (30).

5. A lockable actuator (1) according to any preceding claim, wherein the sleeve (30) has a grooved portion (31.2) for co-operating with fluting (27) of the screw (15) .

6. A lockable actuator (1) according to any preceding claim, including return means (32) for returning the sleeve (30) into position.

7. A lockable actuator (1) according to claim 6, wherein the return means comprise a helical spring (32).

8. A lockable actuator (1) according to claim 1, wherein the pawl (40) includes a manual declutching device (50).

9. A lockable actuator (1) according to any preceding claim, wherein the sleeve (30) comprises a first portion (101) and a second portion (103), the outside diameter (D₁₀₁) of the first portion (101) being less than the outside diameter (D₁₀₃) of the second portion (103).

10. A lockable actuator (1) according to claim 9, wherein the first portion (101) is situated between a first end (33) of the sleeve (30) and a transverse face (102) of the obstacle (36) secured to the sleeve (30) and that faces a first end (33) of the sleeve (30).

11. A lockable actuator (1) according to claim 1, **characterized in that** the sleeve (30), the pawl (40), and the declutching actuator (42) are arranged so as to allow the nut (19) to move freely from a position lying between the deployed second position and the retracted third position towards the retracted third position, and to enable the pawl (40) to be automatically in its active state when the nut passes to its retracted third position without any need to power the declutching actuator (42).

12. A jet nacelle (7) including at least one lockable actuator (1) according to any preceding claim.
